# EUROPEAN PATENT SPECIFICATION

(11) **EP 3 256 713 B1**
(45) Date of publication and mention of the grant of the patent: **03.04.2019**
(21) Application number: 15705339.8
(22) Date of filing: 09.02.2015
(51) Int. Cl.: F02M 21/02

(54) **A FUEL SUPPLY ELEMENT CONFIGURED TO BE USED IN A FUEL SUPPLY PIPE SYSTEM OF AN INTERNAL COMBUSTION PISTON ENGINE AND A FUEL SUPPLY PIPE SYSTEM**
ZUR VERWENDUNG IN EINEM KRAFTSTOFFVERSORGUNGSLEITUNGSSYSTEM EINES KOLBENVERBRENNUNGSMOTORS KONFIGURIERTES KRAFTSTOFFVERSORGUNGSELEMENT UND KRAFTSTOFFVERSORGUNGSLEITUNGSSYSTEM
ÉLÉMENT D'ALIMENTATION EN CARBURANT CONÇU POUR ÊTRE UTILISÉ DANS UN SYSTÈME DE TUYAU D'ALIMENTATION EN CARBURANT D'UN MOTEUR À COMBUSTION INTERNE À PISTON, ET SYSTÈME DE TUYAU D'ALIMENTATION EN CARBURANT

(43) Date of publication of application: 20.12.2017
(73) Proprietor: Wärtsilä Finland Oy, 65380 Vaasa (FI)
(72) Inventor: LATTANZIO, Vincenzo, I-34018 San Dorlingo della Valle (Trieste) (IT); VALENTINUZZI, Alessandro, I-34018 San Dorlingo della Valle (Trieste) (IT)
(74) Representative: Genip Oy
(86) International application number: PCT/FI2015/050081
(87) International publication number: WO 2016/128605

(56) References cited:
- EP-A1- 2 589 780
- WO-A1-2012/163462
- WO-A1-2014/076367
- KR-B1- 101 393 217

## Description

### Technical field

The present invention relates to a fuel supply element configured to be used in a fuel supply pipe system of an internal combustion piston engine according to the preamble of claim 1.

The present invention relates also to a fuel supply pipe system.

### Background art

It is known as such to utilize gas as a fuel for internal combustion engines. It is also known as such that the delivery of the gas in the combustion chamber may be realized such that the engine is provided with fuel admission valves to feed gaseous fuel into the intake channels of the cylinders. In the intake channels the gaseous fuel is mixed with the combustion air. Then the gaseous fuel and combustion air mixture is introduced into the cylinders. Each cylinder is provided with its own fuel admission valve.

WO 2014/076367 A1 discloses a gas feed system for reciprocating engine comprising intake ports for conducting combustion air and gaseous fuel into cylinders, gas feed valves for feeding gaseous fuel into the intake ports wherein each intake port is provided with its own gas feed valve and the gas feed valves are surrounded by valve housings. The gas feed system further comprises separate gas line portions for conducting gaseous fuel to the gas feed valves. Each gas line portion is arranged between two adjacent valve housings so that one end of the gas line portion is in one of the valve housings and the other end is in the other valve housing.

WO 2012/163462 A1 discloses a double-walled fuel supply line element configured to be used in a fuel supply system. The double-walled fuel supply line element comprising an inner line element, an outer line element and a connecting structure configured to fixedly arrange the outer line element around the inner line element such that a tubular hollow space is provided between the inner line element and the outer line element. The inner line element, the outer line element and the connecting structure being integrally casted from a cast steel and/or a cast iron.

KR 101393217 B1 discloses a gas admission valve assembly for a dual fuel engine. The gas inlet valve assembly comprises an external housing having open lower part that covers a gas inlet valve. The housing is to be placed on the upper surface of the cylinder head. The gas inlet valve is, however, fixed to the cylinder head surface.

Even if the solution according to prior art may be beneficial as such there is still a need to improve the fuel supply system and the components thereof.

An object of the invention is to provide a fuel supply element which serviceability and flexibility is considerably improved compared to the prior art solutions.

### Disclosure of the Invention

An object of the invention is substantially met by a fuel supply element configured to be used in a fuel supply pipe system of an internal combustion piston engine, the fuel supply element comprising
- a bottom portion and a top portion, in which the bottom portion is provided with an attachment part for mounting to a cylinder head of the internal combustion piston engine and the top portion is provided with a first fastening part and a second fastening part,
- a gas flow channel arranged to extend between the attachment part of the bottom portion and the first fastening part and the second fastening part of the top portion,
- in which the fuel supply element the first fastening part and the second fastening part are arranged to face to opposite directions, and the first fastening part and the second fastening part are arranged compatible with each other such that a first fuel supply element may be connected to a second fuel supply element by attaching the first fastening part of the first fuel supply element to the second fastening part of the second fuel supply element.

It is characteristic to the invention that the fuel supply element is provided with a fuel admission valve element, which is attached with fastening means to the bottom portion of the fuel supply element so that the fuel admission valve belongs structurally to the fuel supply element and when removing the fuel supply element from the cylinder head, the fuel admission valve element is removed at a same time.

This provides a fuel supply element which performance is considerably improved. Particularly, serviceability is improved since the fuel admission valve element is attached to the bottom portion of the fuel supply element. When removing the fuel supply element from the cylinder head, the fuel admission valve element is removed at a same time in one compact element. Advantageously, the fuel supply element is a T-shaped element.

According to an embodiment of the invention, the fuel admission valve element is a gas admission valve element.

According to an embodiment of the invention, the bottom portion is provided with a gap surrounding the fuel admission valve element. The gap is for leaking fluid and a detection of possible leakage can be detected at the very beginning.

According to an embodiment of the invention, the fuel admission valve element is arranged adjacent to the attachment part and being completely inside the bottom portion.

According to an embodiment of the invention, the top portion is provided with a gap for leaking fluid. This is particularly the case when the top portion has a double-walled configuration. Thus the top portion is provided with an outer wall and an inner wall having the gap therebetween.

According to an embodiment of the invention, the top portion and the bottom portion are removably attached gas-tightly together. In other words, the fuel supply element is formed of two separate portions.

According to an embodiment of the invention, the bottom portion acts as a support for the fuel admission valve element. In other words, the bottom portion provides a space for the fuel admission valve.

According to an embodiment of the invention, the bottom portion and the top portion are provided with a sealing means arranged between them.

According to an embodiment of the invention, the fuel admission valve element is provided with a fuel nozzle.

According to an embodiment of the invention, the fuel nozzle is removably attached to the fuel admission valve element. For example, the fuel nozzle is attached to the fuel admission valve element with fastening means such as bolts. According to an embodiment, the fuel nozzle is only guided it to an opening of the cylinder head. Gas-tight sealing of the fuel nozzle and the cylinder head is provided with a sealing means.

According to another embodiment of the invention, the fuel nozzle is removably attached to a cylinder head of the engine. According to an embodiment, the fuel is arranged to be in contact with the fuel admission valve element. Gas-tight sealing of the fuel nozzle and the fuel admission valve is provided with a sealing means.

Another object of the invention is met by a fuel supply pipe system comprising a plurality of the fuel supply elements according to anyone of claims 1-9.

### Brief Description of Drawings

In the following, the invention will be described with reference to the accompanying exemplary, schematic drawings, in which
Figure 1 illustrates a fuel supply pipe system in an internal combustion piston engine according to an embodiment of the invention,
Figure 2 illustrates a portion of the fuel supply system in an internal combustion piston engine according to an embodiment of the invention,
Figure 3 illustrates a portion of the fuel supply system in an internal combustion piston engine according to an embodiment of the invention, and
Figure 4 illustrates a portion of the fuel supply system in an internal combustion piston engine according to an embodiment of the invention.

### Detailed Description of Drawings

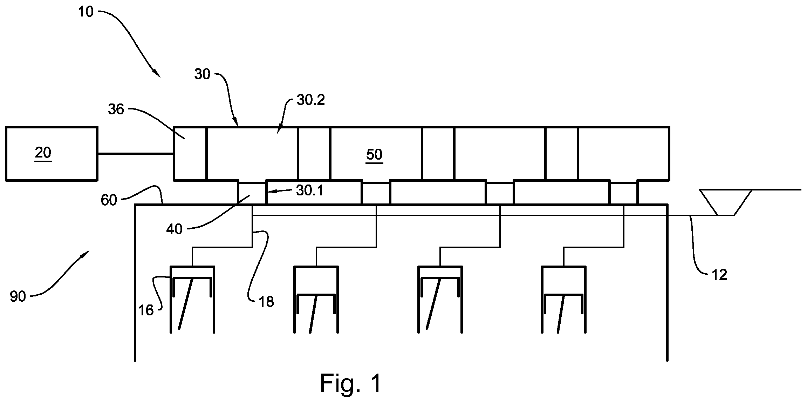

Figure 1 depicts schematically a fuel supply pipe system 10 of an internal combustion piston engine 90. The engine is provided with cylinder 16, a combustion air manifold 12 and combustion air intake channels 18 which connect the air manifold 12 to each of the cylinders 16. Each of the cylinders 16 is provided with its own intake channel 18. The engine 90 is operated with a gaseous fuel as its main fuel. The fuel supply pipe system 10 comprises a plurality of fuel supply elements 30 and a plurality of intermediate channel portions 36 being in connection with the combustion air intake channel 18 of the engine. The fuel supply elements 30 and the intermediate channel portions 36 form a gas flow channel 50. The fuel supply system is operated so that the gaseous fuel is fed from a gaseous fuel source 20 such as a gas tank via the gas flow channel 50 and the intake channels 18 into cylinders 16 of the engine 90.

Combustion air is led via the combustion air manifold 12 into the intake channel 18 wherein gaseous fuel is mixed with combustion air in the intake channel 18. The gas-air mixture is combusted in the cylinders 16 of the engine. In Figure 1, the intake channel 18 is arranged to a cylinder head 60.

The fuel supply pipe system 10 is assembled of plurality of fuel supply elements 30. According to an embodiment of the invention, the fuel supply element 30 comprises a first portion 30.1 and a second portion 30.2. The first portion 30.1 is called as a bottom portion and the second portion 30.2 is called as a top portion. It should be noted that bottom portion refers to a portion that can be attached to the cylinder head 60 and top portion refers to portion extending from the bottom portion and outside the cylinder head 60. Thus, when assembled to the engine, the bottom portion 30.1 is attached gas tightly to a surface of the cylinder head 60.

The fuel supply element 30 is provided with a fuel admission valve element 40. Advantageously, the fuel admission valve element 40 is adapted to control admission of gaseous fuel, i.e. being a gas admission valve element. The fuel admission valve element 40 is arranged to control flow of the gaseous fuel into the intake channels 18 via the fuel supply element and eventually to the cylinders 16 of the engine 90. According to the invention, the fuel admission valve element 40 is attached to the bottom portion 30.1 of the fuel supply element 30. Thus, when the fuel supply element 30 is assembled to the cylinder head 60, the fuel admission valve element 40 is located in a vicinity of the intake channel 18 of the cylinder head 60. However, the fuel admission valve element 40 is attached to the bottom portion 30.1 of the fuel supply element 30 and therefore the attachment to the cylinder head is accomplished indirectly via the fuel supply element. Each cylinder 16 is provided with its own fuel admission valve element 40.

The fuel supply pipe system 10 is provided with the intermediate channel portion 36 arranged between two fuel supply elements for conducting gaseous fuel to fuel admission valve element 40. The intermediate channel portion 36 is attached to the top portion 30.2 of the fuel supply element 30. In the embodiment illustrated in the figure 1, the intermediate channel portion 36 is assembled between each two of the fuel supply elements 30. Advantageously, end portions of the intermediate channel portions and end portions of the top portions of the fuel supply element will match with each other so that they can be attached together in gas tight manner. The intermediate channel portion 36 and the top portion 30.2 of the fuel supply element 30 form together an in-line configuration such that they are aligned with each other in the fuel supply pipe system 10.

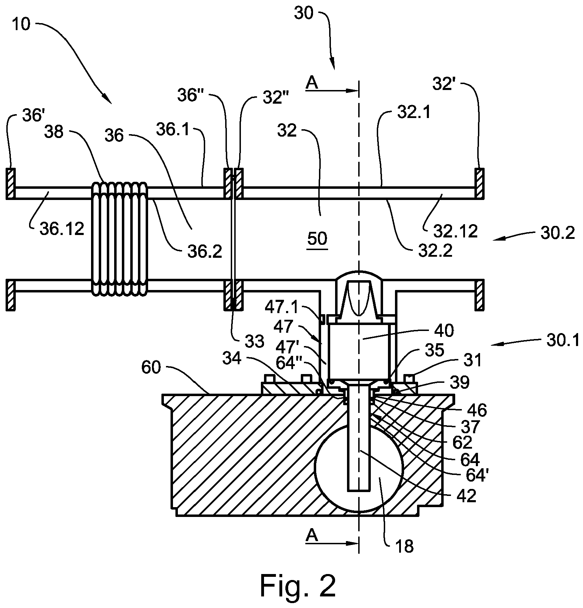

Figure 2 depicts schematically a portion of the fuel supply pipe system 10 in connection with a cylinder head. The fuel supply element 30 comprises the bottom portion 30.1 that is provided with an attachment part 34 for mounting to the cylinder head 60 of the engine 90. In Figure 2, the attachment part 34 is a flange like attachment part and the bottom portion 30.1 is mounted to the cylinder head 60 with the attachment part 34 and fastening means 31. The attachment part 34 is arranged with a sealing means 39 between the bottom portion 30.1 and the cylinder head 60 so as to provide a gas-tight fastening.

The bottom portion 30.1 is provided with a space 47 extending from the attachment part 34 to a distance towards the top portion 30.2. The space 47 may be substantially cylindrical. The space 47 is arranged for the fuel admission valve element 40 and thus the space 47 is greater than the fuel admission valve element 40. There is a gap 47' arranged around the fuel admission valve element 40 when assembled into the space 47. The gap 47' provides a leakage fluid channel, arranged as a precautionary measure for handling a possible leakage gas. The leakage gas may flow from the fuel admission valve element 40 to the gap 47'. Leakage can be detected at the very beginning. As can be seen, a bottom end of the bottom portion 30.1 is open so that the fuel admission valve element 40 can be assembled through this open bottom end into the space 47. The bottom end of the bottom portion 30.1 refers to the end portion in a vicinity of the attachment part 34.

The fuel admission valve element 40 is provided with a fuel nozzle 42. According to an embodiment of the invention, the fuel nozzle is a gas nozzle. The fuel nozzle 42 is arranged to be guided by the cylinder head 60 in an opening arranged to the cylinder head, while extending to the intake channel 18. According to an embodiment of the invention, the fuel nozzle 42 is removably attached to the fuel admission valve element 40 and only guided by the opening the cylinder head. In this case, a gas-tight connection of the fuel nozzle 42 and the fuel admission valve element 40 is provided with a sealing member 35 between the fuel admission valve element and the fuel nozzle. Even if being attached to each other the fuel admission valve element 40 and the fuel nozzle 42 may be separate parts. A gas-tight connection between the cylinder head 60 and the fuel nozzle 42 is provided with a sealing means 37. For example during the maintenance, when the fuel supply element 30 disassembled from the cylinder head 60 also the fuel admission valve 40 and the fuel nozzle 42 come out at the same time as a one package with the fuel supply element 30.

According to another embodiment of the invention, the fuel nozzle 42 is removably attached directly to the cylinder head 60 such that it extends into the intake channel 18. However, the fuel admission valve element 40 is arranged to be in gas tight contact with the fuel nozzle 42 when the bottom portion 30.1 is attached to the cylinder head 60, for example, with fastening means (not shown in figures). This means that when the fuel supply element 30, comprising the fuel admission valve 40 attached to the bottom portion 30.1, is removed from the cylinder head 60, the fuel nozzle 42 remains to be removably attached directly to the cylinder head 60. An end of the fuel nozzle is arranged to extend out of the cylinder head such that the fuel admission valve element 40 and the fuel nozzle 42 are separate parts. In this case also, a gas-tight arrangement of the fuel nozzle 42 and the fuel admission valve element 40 is provided with the sealing member 35 therebetween. Thus the fuel nozzle 42 is easily removable and replaceable. When the fuel supply element 30 is removed from the cylinder head 60 also the fuel admission valve 40 comes out at the same time as one unit with the fuel supply element 30 whereas the fuel nozzle 42 remains to be attached to the cylinder head 60.

The cylinder head 60 is provided with the opening 64 for the fuel nozzle 42, which opening 64 extends from the surface of the cylinder head 60 to the intake channel 18. The fuel nozzle 42 is arranged through the opening 64 of the cylinder head 60 and extending into the intake channel 18. According to an embodiment of the invention, the opening 64 of the cylinder head 60 is formed so that it has a first portion 64' extending to a distance from the intake channel 18 towards the outer surface of the cylinder head and a second portion 64" extending from an end of the first portion 64' to the surface of the cylinder head 60. The first portion 64' has a first diameter and the second portion 64" has a second diameter. The second diameter is greater than the first diameter. Due to the difference between the first diameter and the second diameter, there is a shoulder or alike 62 formed to the opening 64. According to an embodiment of the invention, shown in Figure 2, the fuel nozzle 42 is provided with a radial extension part 46 that can be arranged to be in direct contact with a shoulder 62 in the cylinder head 60. In other words, the extension part 46 rests on the shoulder 62 of the cylinder head 60 when assembled to the cylinder head 60. This provides a very accurate positioning for the fuel nozzle 42 and it defines the position of the fuel nozzle 42 in the opening.

Figure 2 illustrates schematically that the fuel supply element 30 is provided with a double-walled configuration. The double-walled configuration refers to a configuration wherein the top portion 30.2 of the fuel supply element 30 comprises an outer wall 32.1 and an inner wall 32.2. There is a gap 32.12 between the outer wall 32.1 and the inner wall 32.2. In other words, the gas flow channel 50 is enclosed by the inner wall 32.2 and the inner wall 32.2 and the gas flow channel 50 is enclosed by the outer wall 32.2. The gap 32.12 forms a leakage fluid channel that is in flow communication via a leakage port 47.1 with the gap 47' located between the bottom portion 30.1 and the fuel admission valve element 40. This has the technical effect of detecting the possible leakage to the gap 32.12 at the very beginning.

The top portion 30.2 is provided with a first fastening part 32' and a second fastening part 32". The second fastening part 32" is arranged at a distance from the first fastening part 32'.The first fastening part 32' and the second fastening part 32" are arranged to face to opposite directions. The fuel supply element is a T-shaped element. According to an embodiment of the invention the first fastening part 32' and the second fastening part 32" are arranged compatible with each other. This means that a first fuel supply element may be connected to a second fuel supply element by attaching the first fastening part of the first fuel supply element to the second fastening part of the first fuel supply element to the second fastening part of the second fuel supply element.

According to an embodiment, shown in Figure 2, the fuel supply pipe system 10 is provided with the intermediate channel portion 36 attached to the fuel supply element 30. The intermediate channel portion 36 comprises a first fastening part 36' and a second fastening part 36". The second fastening part 36" of the intermediate channel portion 36 is arranged at a distance from the first fastening part 36' of the intermediate channel portion 36. The first fastening part 36' of the intermediate channel portion 36 and the second fastening part 36" of the intermediate channel portion 36 are arranged to face opposite directions. The intermediate channel portion 36 is provided with a bellows 38. The bellows 38 are arranged between the first fastening part 36' of the intermediate channel portion 36 and the second fastening part 36" of the intermediate channel portion 36.

Advantageously, the first fastening part 32' of the first channel portion 32 and the second fastening part 32" of the first channel portion 36, the first fastening part 36' of the intermediate channel portion 36 and the second fastening part 36" of the intermediate channel portion 36 are arranged compatible with each other. Figure 2, illustrates that the second fastening part 36" of the intermediate channel portion 36 is attached to the second fastening part 32" of the first channel portion 32. A gas-tight connection of the first channel portion 32 with the intermediate channel portion 36 is provided with a sealing means 33. Similarly, the first fastening part 36' of the intermediate channel portion 36 can be attached to the first fastening part 32' of the first channel portion 32 (not shown).

The intermediate channel portion 36 is provided with a double-walled configuration similarly as the first channel portion 32, particularly the top portion 30.1 of the fuel supply element 30. The intermediate channel portion 36 comprises an outer wall 36.1 and an inner wall 36.2. The outer wall 36.1 and the inner wall 36.2 is provided with a gap 36.12 therebetween. The inner wall 36.2 encloses the gas flow channel 50. The outer wall 36.1 encloses the inner wall 36.2 and the gas flow channel 50. The technical effect the gap 36.12 is to detect a possible leakage to the gap 36.12 at the very beginning.

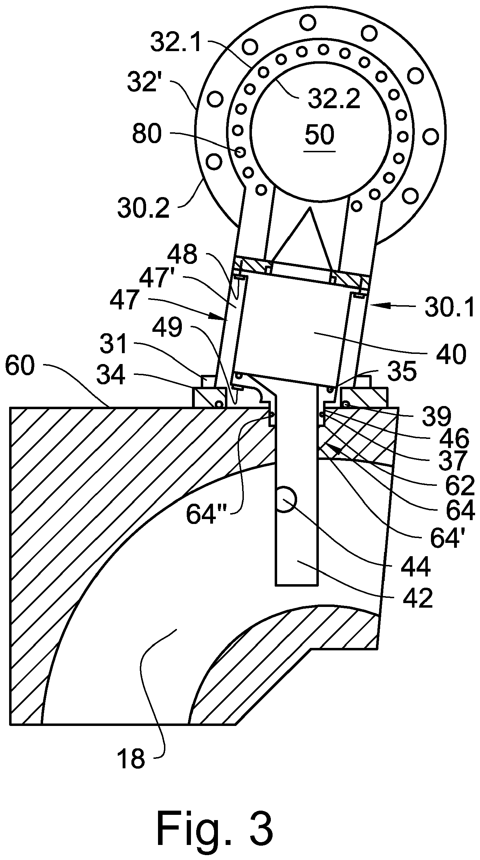

Figure 3 illustrates substantially an A-A view of Figure 2 according to an embodiment of the invention. The fuel admission valve element 40 is attached with a fastening means 48 to the bottom portion 30.1 of the fuel supply element 30. In other words, the fuel admission valve 40 belongs structurally to the fuel supply element 30. According to an embodiment shown in Figure 3, the fuel nozzle 42 is attached, merely, to the fuel admission valve element 40 with a fastening means 49. Thus, when the fuel supply element 30 is removed from the cylinder head 60, the fuel admission valve 40 and the fuel nozzle 42 will be removed at a same time from the cylinder head. In other words, the fuel admission valve 30 is not directly affixed to the cylinder head 60.

The top portion 30.2 is illustrated as the double-walled configuration, similarly to Figure 2. The gap 32.12 in the top portion 30.2 is provided with a plurality of openings 80 so as to guide leakage fluid to a leakage detection sensor or alike (not shown). The fuel nozzle 42 is provided with an opening 44 so as to feed gaseous fuel into the intake channel 18. However, it should be noted that a number of openings may vary. In the intake channel 18 the gaseous fuel is mixed with the combustion air.

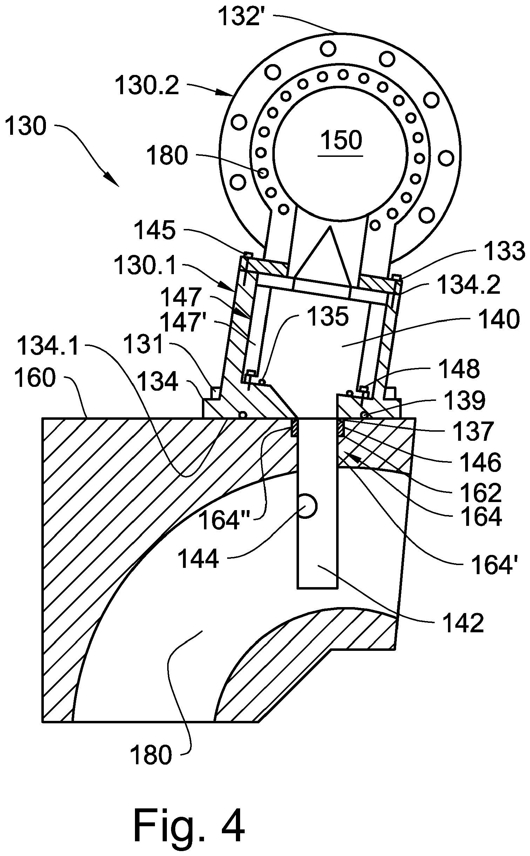

Figure 4 illustrates schematically an embodiment of the invention wherein a fuel supply element 130 comprises a bottom portion 130.1 and a top portion 130.2 removably attached together.

The bottom portion 130.1 is attached to a cylinder head 160 with an attachment part 134 using fastening means 131. According to an embodiment shown in Figure 4, the bottom portion 130.1 is provided with a bottom surface 134.1 and a top end 134.2. Specifically, the attachment part 134 comprises the bottom surface 134.1. The bottom surface 134.1 is arranged to be in direct contact with a surface of the cylinder head 160. A gas-tight connection of the bottom portion 130.1 and the cylinder head 160 is provided with a sealing means 139 therebetween. The top end 134.2 is arranged to a distance from the bottom surface 134.1. The top end 134.2 comprises means for receiving the top portion 130.2 so that the top portion can be attached to the top end 134.2 of the bottom portion 130.2.

The top portion 130.2 is provided with a third fastening part 133 for attaching the top portion 130.2 to the bottom portion 130.1. Thus, the top portion 130.2 is attached removably to the bottom portion 130.1 with the third fastening part 133 and fastening means 145. The third fastening part 133 may be a flange or alike. As can be seen, the top portion 130.2 is attached to the top end 134.2 of the bottom portion 130.1.

The bottom portion 130.1 of the fuel supply element 130 is provided with a space 147 for a fuel admission valve element 140. The space is greater than the fuel admission valve element 140.

Similarly as in Figures 2 and 3, there is a gap 147 around the fuel admission valve element 140. The gap 147 provides a leakage fluid channel around the fuel admission valve element 140. The fuel admission valve element 140 is attached to the bottom portion 130.1. The fuel admission valve element 140 is attached to the bottom portion 130.1 with fastening means 148. According to an embodiment of the invention, the fuel admission valve element 140 is screwed to its place to the bottom portion 130.1. A gas-tight fastening of the fuel admission valve element 140 with the bottom portion 130.1 is provided with a sealing means 135. On the contrary to the embodiment shown in Figure 3, the fuel admission valve element 140 is arranged to its place into the space 147 from an upper part i.e. via the top end 134.2 of the bottom portion 130.2. In Figure 4, the bottom portion 130.1 acts as a support for the fuel admission valve element 140. According to an embodiment of the invention, and as can be seen in Figure 4, a bottom end of the bottom portion 130.1 has an opening which diameter is smaller than the greatest diameter of the fuel admission valve element 140.

The fuel admission valve element 140 is provided with a fuel nozzle 142 for feeding gaseous fuel into an intake channel 180. The fuel nozzle 142 is attached to the cylinder head 160. The fuel nozzle 142 extends into the intake channel 180. The fuel nozzle 142 is provided with a nozzle opening 144 arranged to open to the intake channel 180. The fuel nozzle 142 is provided with a radial extension part 146 that is guided to an opening 164 of the cylinder head 160. The opening 164 in the cylinder head 160 is formed so that it has a first portion 164' extending to a distance from the intake channel 180 towards the surface of the cylinder head and a second portion 164" extending from an end of the first portion 164' to the surface of the cylinder head 160. The first portion 164' has a first diameter and the second portion 164" has a second diameter. The second diameter is greater than the first diameter. Due to the difference between the first diameter and the second diameter, there is a shoulder or alike 162 formed to the opening 164. The radial extension part 146 is arranged to be in direct contact with the shoulder 162 in the cylinder head 160. In other words, the extension part 146 rests on the shoulder 162 of the cylinder head 160 when assembled to the cylinder head 160. This provides a very accurate positioning for the fuel nozzle 142. A gas-tight connection between the cylinder head 160 and the fuel nozzle 142 is provided with a sealing means 137. According to an embodiment of the invention, the fuel nozzle 162 may be attached directly to the cylinder head 160 with fastening means (not shown in figures).

As an example, according to an embodiment of Figure 4, when the top portion 130.2 of the fuel supply element 130 is removed from the cylinder head 60, bottom portion 130.1, the fuel admission valve 140 and the fuel nozzle 142 remains to be attached with the cylinder head 160. When the fuel admission valve element 140 removed, the bottom portion 130.2 and the fuel nozzle remains attached with the cylinder head 160. Then the bottom portion 130.2 can be removed and the fuel nozzle 142 can be removed individually. Another example: when removing only the fastening means 134, the fuel supply element 130 comprising the top portion 130.2, the bottom portion 130.1 and the fuel admission valve element 140 can be removed from the cylinder head 160 as one compact unit. However, the fuel nozzle 142 remains fastened to the cylinder head 160.

Figure 4 discloses a gas flow channel 150 for feeding gaseous fuel to the fuel admission valve 140. The top portion 130.2 is provided with a first fastening part 132' and a second fastening part. The second fastening part is not shown but it is similar to the first fastening part 132', see also the second fastening part 32" in Figure 1.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A fuel supply element (30, 130) configured to be used in a fuel supply pipe system (10) of an internal combustion piston engine (90), the fuel supply element (30, 130) comprising
- a bottom portion (30.1, 130.1) and a top portion (30.2, 130.2), in which the bottom portion (30.1, 130.1) is provided with an attachment part (34, 134) for mounting to a cylinder head of the internal combustion piston engine and the top portion (30.2, 130.2) is provided with a first fastening part (32', 132') and a second fastening part (32"),
- a gas flow channel (50, 150) arranged to extend between the attachment part (34, 134) of the bottom portion and the first fastening part (32', 132') and the second fastening part (32") of the top portion (30.2, 130.2),
- in which the fuel supply element (30) the first fastening part (32', 132') and the second fastening part (32") are arranged to face to opposite directions, and the first fastening part (32', 132') and the second fastening part (32") are arranged compatible with each other such that a first fuel supply element may be connected to a second fuel supply element by attaching the first fastening part (32', 132') of the first fuel supply element to the second fastening part (32") of the second fuel supply element,
**characterized in that** the fuel supply element (30, 130) is provided with a fuel admission valve element (40, 140), which is attached with fastening means (48, 148) to the bottom portion (30.1, 130.1) of the fuel supply element (30, 130) so that the fuel admission valve element (40, 140) belongs structurally to the fuel supply element (30, 130) and when removing the fuel supply element from the cylinder head, the fuel admission valve element (40, 140) is removed at a same time.

2. A fuel supply element according to claim 1, **characterized in that** the bottom portion (30.1, 130.1) is provided with a gap (47', 147') surrounding the fuel admission valve element (40, 140).

3. A fuel supply element according to claim 1, **characterized in that** the fuel admission valve element (40, 140) is arranged adjacent to the attachment part (34, 134) and being completely inside the bottom portion (30.1, 130.1).

4. A fuel supply element according to anyone of claims 1-3, **characterized in that** the top portion is provided with a gap (32.12) for leaking fluid.

5. A fuel supply element according to claim 1, **characterized in that** the top portion (30.2, 130.2) and the bottom portion (30.1, 130.1) are removably attached gas-tightly together.

6. A fuel supply element according to claim 5, **characterized in that** the bottom portion (30.1, 130.1) and the top portion (30.2, 130.2) are provided with a sealing means arranged between them.

7. A fuel supply element according to claim 1, **characterized in that** the fuel admission valve element (40, 140) is provided with a fuel nozzle (42, 142).

8. A fuel supply element according to claim 7, **characterized in that** the fuel nozzle (42) is removably attached to the fuel admission valve element (40).

9. A fuel supply element according to claim 7, **characterized in that** the fuel nozzle (42) is removably attached to a cylinder head (160) of the engine (90).

10. A fuel supply pipe system (10) comprising a plurality of the fuel supply elements (30, 130) according to anyone of claims 1-9.

## Patentansprüche

1. Kraftstoffzufuhrelement (30, 130), das konfiguriert ist, in einem Kraftstoffzufuhr-Leitungssystem (10) eines Kolbenverbrennungsmotors (90) genutzt zu werden, das Kraftstoffzufuhrelement (30, 130) umfassend
- einen unteren Abschnitt (30.1, 130.1) und einen oberen Abschnitt (30.2, 130.2), wobei der untere Abschnitt (30.1, 130.1) mit einem Anbringungsteil (34, 134) zum Anbau an einen Zylinderkopf des Kolbenverbrennungsmotors versehen ist, und der obere Abschnitt (30.2, 130.2) mit einem ersten Befestigungsteil (32', 132') und einem zweiten Befestigungsteil (32") versehen ist,
- einen Gasstromkanal (50, 150), der angeordnet ist, sich zwischen dem Anbringungsteil (34, 134) des unteren Abschnitts und dem ersten Befestigungsteil (32', 132') und dem zweiten Befestigungsteil (32") des oberen Abschnitts (30.2, 130.2) zu erstrecken,
- wobei das Kraftstoffzufuhrelement (30) das erste Befestigungsteil (32', 132') und das zweite Befestigungsteil (32") angeordnet sind, entgegengesetzten Richtungen zugewandt zu sein, und das erste Befestigungsteil (32', 132') und das zweite Befestigungsteil (32") derart kompatibel miteinander angeordnet sind, dass ein erstes Kraftstoffzufuhrelement an ein zweites Kraftstoffzufuhrelement durch Anbringen des ersten Befestigungsteils (32', 132') des ersten Kraftstoffzufuhrelements an dem zweiten Befestigungsteil (32") des zweiten Kraftstoffzufuhrelements angeschlossen werden kann,
**dadurch gekennzeichnet, dass** das Kraftstoffzufuhrelement (30, 130) mit einem Kraftstoffeinlassventilelement (40, 140) versehen ist, das mit Befestigungsmitteln (48, 148) an dem unteren Abschnitt (30.1, 130.1) des Kraftstoffzufuhrelements (30, 130) angebracht ist, so dass das Kraftstoffeinlassventilelement (40, 140) strukturell zu dem Kraftstoffzufuhrelement (30, 130) gehört, und beim Entfernen des Kraftstoffzufuhrelements vom Zylinderkopf das Kraftstoffeinlassventilelement (40, 140) zu einer gleichen Zeit entfernt wird.

2. Kraftstoffzufuhrelement nach Anspruch 1, **dadurch gekennzeichnet, dass** der untere Abschnitt (30.1, 130.2) mit einem Zwischenraum (47', 147') versehen ist, der das Kraftstoffeinlassventilelement (40, 140) umgibt.

3. Kraftstoffzufuhrelement nach Anspruch 1, **dadurch gekennzeichnet, dass** das Kraftstoffeinlassventilelement (40, 140) angrenzend an das Anbringungsteil (34, 134) angeordnet ist und sich vollständig innerhalb des unteren Abschnitts (30.1, 130.1) befindet.

4. Kraftstoffzufuhrelement nach einem der Ansprüche 1 bis 3, **dadurch gekennzeichnet, dass** der obere Abschnitt mit einem Zwischenraum (32.12) für leckendes Fluid versehen ist.

5. Kraftstoffzufuhrelement nach Anspruch 1, **dadurch gekennzeichnet, dass** der obere Abschnitt (30.2, 130.2) und der untere Abschnitt (30.1, 130.1) abnehmbar gasdicht aneinander angebracht sind.

6. Kraftstoffzufuhrelement nach Anspruch 5, **dadurch gekennzeichnet, dass** der untere Abschnitt (30.1, 130.1) und der obere Abschnitt (30.2, 130.2) mit einem Dichtungsmittel versehen sind, das zwischen ihnen angeordnet ist.

7. Kraftstoffzufuhrelement nach Anspruch 1, **dadurch gekennzeichnet, dass** das Kraftstoffeinlassventilelement (40, 140) mit einer Kraftstoffdüse (42, 142) versehen ist.

8. Kraftstoffzufuhrelement nach Anspruch 7, **dadurch gekennzeichnet, dass** die Kraftstoffdüse (42) abnehmbar an dem Kraftstoffeinlassventilelement (40) angebracht ist.

9. Kraftstoffzufuhrelement nach Anspruch 7, **dadurch gekennzeichnet, dass** die Kraftstoffdüse (42) abnehmbar an einem Zylinderkopf (160) des Motors (90) angebracht ist.

10. Kraftstoffzufuhr-Leitungssystem (10) umfassend eine Mehrzahl von den Kraftstoffzufuhrelementen (30, 130) nach einem der Ansprüche 1 bis 9.

## Revendications

1. Élément d'alimentation en carburant (30, 130) configuré pour être utilisé dans un système de tuyaux d'alimentation de carburant (10) d'un moteur à pistons à combustion interne (90), l'élément d'alimentation en carburant (30, 130) comprenant
- une partie inférieure (30.1, 130.1) et une partie supérieure (30.2, 130.2) dans lequel la partie inférieure (30.1, 130.1) est dotée d'une pièce d'attachement (34, 134) pour le montage sur une tête de cylindre du moteur à pistons à combustion interne et la partie supérieure (30.2, 130.2) est dotée d'une première pièce de fixation (32', 132') et d'une seconde pièce de fixation (32"),
- un canal d'écoulement de gaz (50, 150) agencé pour s'étendre entre la pièce d'attachement (34, 134) de la partie inférieure et la première pièce de fixation (32', 132') et la seconde pièce de fixation (32") de la partie supérieure (30.2, 130.2),
- dans lequel l'élément d'alimentation en carburant (30), la première pièce de fixation (32', 132') et la seconde pièce de fixation (32") sont agencées pour être faces à des directions opposées, et la première pièce de fixation (32', 132') et la seconde pièce de fixation (32") sont agencées de manière compatible entre elles de façon à ce qu'un premier élément d'alimentation en carburant puisse être connecté à un second élément d'alimentation en carburant en attachant la première pièce de fixation (32', 132') du premier élément d'alimentation de carburant à la seconde pièce de fixation (32"") du second élément d'alimentation en carburant,
**caractérisé en ce que** l'élément d'alimentation en carburant (30, 130) est doté d'un élément de soupape d'admission de carburant (40, 140) qui est attaché avec un moyen de fixation (48, 148) à la partie inférieure (30.1, 130.1) de l'élément d'alimentation en carburant (30, 130) de façon à ce que l'élément de soupape d'admission de carburant (40, 140) fasse partie structurellement de l'élément d'alimentation en carburant (30, 130) et lorsque l'élément d'alimentation en carburant est retiré de la tête de cylindre, l'élément de soupape d'admission de carburant (40, 140) est retiré en même temps.

2. Élément d'alimentation en carburant selon la revendication 1, **caractérisé en ce que** la partie inférieure (30.1, 130.1) est dotée d'un espace (47', 147') entourant l'élément de soupape d'admission de carburant (40, 140).

3. Élément d'alimentation en carburant selon la revendication 1, **caractérisé en ce que** l'élément de soupape d'admission de carburant (40, 140) est agencé adjacent à la pièce d'attachement (34, 134) et étant complètement à l'intérieur de la partie inférieure (30.1, 130.1).

4. Élément d'alimentation en carburant selon l'une quelconque des revendications 1 - 3, **caractérisé en ce que** la partie supérieure est dotée d'un espace (32.12) pour du fluide qui fuit.

5. Élément d'alimentation en carburant selon la revendication 1, **caractérisé en ce que** la partie supérieure (30.2, 130.2) et la partie inférieure (30.1, 130.1) sont fixées entre elles de façon séparable en étanchéité aux gaz.

6. Élément d'alimentation en carburant selon la revendication 5, **caractérisé en ce que** la partie inférieure (30.1, 130.1) et la partie supérieure (30.2, 130.2) sont dotées d'un moyen d'étanchéité agencé entre elles.

7. Élément d'alimentation en carburant selon la revendication 1, **caractérisé en ce que** l'élément de soupape d'admission de carburant (40, 140) est doté d'une buse de carburant (42, 142).

8. Élément d'alimentation en carburant selon la revendication 7, **caractérisé en ce que** la buse de carburant (42) est attachée de façon séparable à l'élément de soupape d'admission de carburant (40).

9. Élément d'alimentation en carburant selon la revendication 7, **caractérisé en ce que** la buse de carburant (42) est attachée de façon séparable à une tête de cylindre (160) du moteur (90).

10. système de tuyaux d'alimentation en carburant (10) comprenant une pluralité des éléments d'alimentation de carburant (30, 130) selon l'une quelconque des revendications 1 - 9.
